# EUROPÄISCHE PATENTSCHRIFT

(11) **EP 1 325 270 B1**
(45) Veröffentlichungstag und Bekanntmachung des Hinweises auf die Patenterteilung: **09.02.2005**
(21) Anmeldenummer: 01958044.8
(22) Anmeldetag: 01.08.2001
(51) Int. Cl.: F25B 43/00, F16L 41/02

(54) **TROCKNER FÜR EIN KÄLTEGERÄT**
DRYER FOR A REFRIGERATION DEVICE
SECHOIR POUR UN APPAREIL DE REFRIGERATION

(30) Priorität: 21.08.2000 DE 10040852
(43) Veröffentlichungstag der Anmeldung: 09.07.2003
(73) Patentinhaber: BSH Bosch und Siemens Hausgeräte GmbH, 81739 München (DE)
(72) Erfinder: KENTNER, Wolfgang, 89365 Röfingen (DE); STEICHELE, Helmut, 89415 Lauingen (DE)
(86) Internationale Anmeldenummer: PCT/EP2001/008912
(87) Internationale Veröffentlichungsnummer: WO 2002/016839

(56) Entgegenhaltungen:
- EP-A- 0 039 390
- EP-A- 0 209 418
- EP-A- 0 731 309
- DE-A- 2 656 664
- GB-A- 895 505

## Beschreibung

Die vorliegende Erfindung betrifft einen Trockner für den Kältemittelkreislauf eines Kältegeräts. Derartige Trockner umfassen ein zumeist metallisches Gehäuse, in dem ein Trocknungsmittel untergebracht ist, das im Betrieb des Kältegeräts von dem Kältemittel durchflossen wird und die Aufgabe hat, Restanteile von Wasser im Kältemittel zu absorbieren und zu binden. Ein solcher Trockner ist aus Dokument EP-A-0 039 390 schon bekannt.

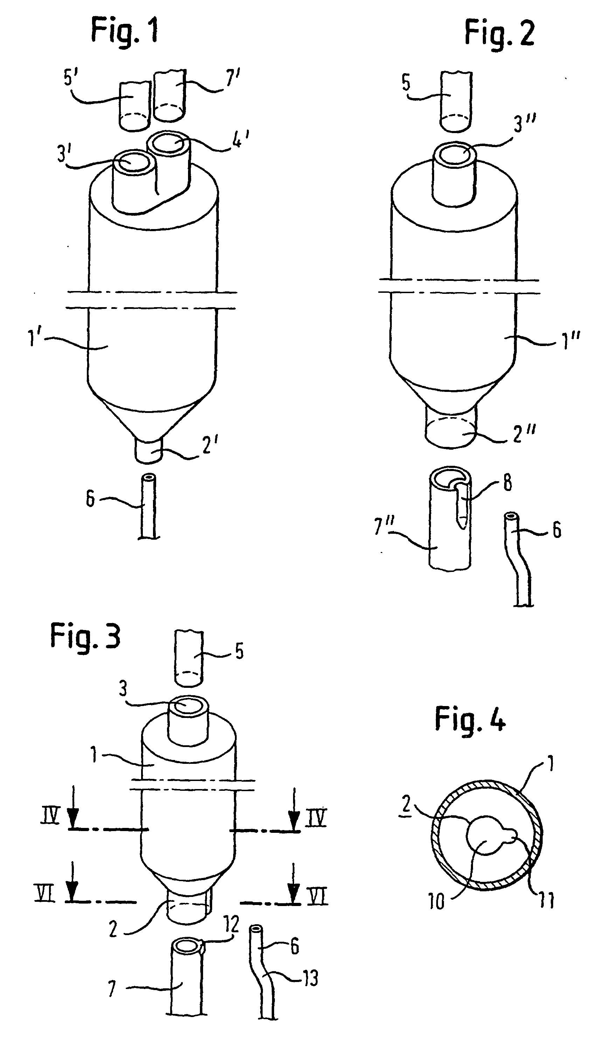

Bei der Montage solcher Kältegeräte muß nach dem Befüllen des Kältekreislaufs mit dem Kältemittel der Kältemittelkreislauf von darin enthaltener Luft befreit werden. Dies erfolgt mit Hilfe von Evakuierungsleitungen, die nach erfolgter Evakuierung hermetisch verschlossen werden. Ein bevorzugter Ort zur Anbringung einer solchen Evakuierungsleitung ist der Trockner. Eine bekannte Möglichkeit, die Evakuierungsleitung an dem Trockner anzubringen, ist, das Gehäuse des Trockners mit drei Durchtrittsöffnungen auszustatten, wobei eine zum Anschluß einer Eingangsleitung für das Kältemittel, eine zweite zum Anschluß einer Ausgangsleitung und die dritte zum Anschluß der Evakuierungsleitung vorgesehen ist. Bei einer in Fig. 1 gezeigten, von der Anmelderin in der Praxis eingesetzten Bauform eines Trockners hat dessen Gehäuse 1' eine langgestreckte zylindrische Gestalt, an dessen Enden Durchtrittsöffnungen 2', 3', 4' in Form von Anschlußstutzen ausgebildet sind. Am in der Fig. oben liegenden Ende des Gehäuses 1' dienen zwei Durchtrittsöffnungen 3' und 4' zur Aufnahme einer von einem Verflüssiger kommenden Kältemittelzufuhrleitung 5', über die das Kältemittel unter hohem Druck dem Trockner zugeführt wird, bzw. einer Evakuierungsleitung 7'.

Eine an die kleinformatige Durchtrittsöffnung 2' am unteren Ende des Gehäuses angeschlossene Kapillare dient zur Entspannung des Kältemittels nach dem Durchgang durch den Trockner.

Der am oberen Ende benötigte Doppeleingang macht das Gehäuse in der Herstellung relativ aufwendig und kostspielig.

Ein anderes von der Anmelderin eingesetztes Trocknergehäuse ist in Fig. 2 gezeigt. Bei diesem Gehäuse 1" ist der Doppelanschluß an einem Ende vermieden, so daß das Gehäuse 1" auf preiswerte und einfache Weise z.B. durch Verformen eines Rohrstücks aus Kupfer geformt werden kann. Bei diesem Gehäuse 1" ist eine erste Durchtrittsöffnung 2" vorgesehen, um sowohl die Evakuierungsleitung 7" als auch die Kapillare 6 aufzunehmen; an der zweiten Durchtrittsöffnung 3" wird die Zufuhrleitung 5 angeschlossen.

In den in die Durchtrittsöffnung 2" einzuführenden Endabschnitt der Evakuierungsleitung 7" wird eine Kerbe 8 eingedrückt, die so bemessen ist, daß ein Endabschnitt der Kapillare 6 in die Kerbe 8 eingefügt und beide Endabschnitte gemeinsam in die Durchtrittsöffnung 2 eingeführt und darin verlötet werden können.

Diese Lösung ist jedoch aus mehreren Gründen unbefriedigend. Zum einen wird durch die Kerbe 8 der freie Querschnitt der Evakuierungsleitung 7" empfindlich verkleinert, so daß der Leitwert der Evakuierungsleitung 7"gegenüber einer nicht verformten Leitung 7' deutlich reduziert ist. Dies hat jedoch zur Folge, daß der Evakuierungsvorgang bei einem Kältemittelkreislauf mit dem Trockner aus Fig. 2 deutlich mehr Zeit in Anspruch nimmt, als bei einem Trockner aus Fig. 1 mit entsprechenden Abmessungen.

Ein weiteres Problem ist, daß das Eindrücken der Kerbe 8 mit hoher Genauigkeit erfolgen muß, um den freien Querschnitt der Evakuierungsleitung 7" nicht mehr zu beeinträchtigen, als unbedingt notwendig, und um zu verhindern, daß ihr Endbereich in die Breite gedrückt wird und aus diesem Grund nicht mehr in die Durchtrittsöffnung 2 eingeführt werden kann.

Eine weitere Schwierigkeit ergibt sich bei der Montage des Trockners aus Fig. 2. Führt man die Kapillare 6 vor der Evakuierungsleitung 7" in die Durchtrittsöffnung 2 ein, so kann die Kapillare 6 darin nicht befestigt werden, bevor nicht die Evakuierungsleitung 7" plaziert ist; führt man zuerst die Evakuierungsleitung 7" ein, so kann die Kapillare 6 nicht mehr nachträglich eingeschoben werden. Es müssen daher drei Teile, nämlich das Gehäuse 1", die Evakuierungsleitung 7" und die Kapillare 6 gleichzeitig gehandhabt und miteinander verbunden werden, was beschwerlich ist. Falls die Kerbe 8 zu scharf geknickt ist, kann es außerdem vorkommen, daß die Kapillare 6 an der Innenwand der Kerbe 8 an zwei Stellen anliegt, was das Eindringen von Lot beim Verlöten der drei Teile miteinander erschwert. Dies kann Dichtigkeitsprobleme zur Folge haben.

Aufgabe der vorliegenden Erfindung ist, einen Trockner für den Kältemittelkreislauf eines Kältegeräts anzugeben, dessen Gehäuse einfach und preiswert zu fertigen ist, der leicht zu montieren und zuverlässig abzudichten ist.

Diese Aufgabe wird gelöst durch einen Trockner mit den Merkmalen des Anspruchs 1. Da dieser Trockner lediglich zwei Durchtrittsöffnungen zum Anschließen von drei Leitungen erfordert, ist er einfach und preiswert zu fertigen. Die Querschnittsform der ersten Austrittsöffnung mit einem kreisrunden Hauptabschnitt und einer seitlichen Ausbuchtung erlaubt es, zwei Leitungen von unterschiedlichem Durchmesser einzuführen und zu montieren, wobei die Anbringung der schmaleren Leitung nicht behindert wird, wenn zuvor die mit dem größeren Querschnitt angebracht worden ist.

Eine besondere Erleichterung bei der Montage ergibt sich, wenn die Evakuierungsleitung an ihrem zum Einführen in das Gehäuse vorgesehenen Ende einen Vorsprung trägt. Dieser Vorsprung kann beim Einführen der Evakuierungsleitung durch die dann noch freie seitliche Ausbuchtung geführt werden; anschließend wird die Evakuierungsleitung um ihre Achse gedreht, so daß der Vorsprung nicht mehr mit der seitlichen Ausbuchtung fluchtet und die Evakuierungsleitung dadurch gegen ein Herausfallen gesichert ist, auch wenn sie noch nicht fest mit dem Gehäuse des Trockners verbunden ist. Nach dem Verdrehen kann in die nun wieder freie seitliche Ausbuchtung die Kapillare eingeschoben werden.

Der Vorsprung am Ende der Evakuierungsleitung kann auf einfache Weise durch Aufweiten des Endes der Evakuierungsleitung, z.B. durch Einführen eines Doms in die Leitung, gebildet werden.

Die vorgeschlagene Trocknerkonstruktion eignet sich besonders zur Montage in einem Kältegerät mit nach unten orientierter erster Durchtrittsöffnung. Die Sicherung der Evakuierungsleitung gegen Herausfallen erleichtert es nämlich, diese und die Kapillare erst nach Montage des Trockners in dem Kältegerät mit dem Gehäuse zu verlöten, wodurch Spannungen an der Lötstelle vermieden werden, die sich andernfalls ergeben könnten, wenn bei der Montage eines bereits fertig verlöteten Kältekreislaufs in dem Kältegerät an das Gehäuse angeschlossene Leitungen verformt werden müssen.

Weitere Merkmale und Vorteile der Erfindung ergeben sich aus der nachfolgenden Beschreibung eines Ausführungsbeispiels mit Bezug auf die beigefügte Fig. 3.

Die Figuren zeigen:
- Fig. 1, 2: bekannte Bauformen von Trocknem für den Kältemittelkreislauf eines Kältegeräts;
- Fig. 3: einen erfindungsgemäßen Trockner; und
- Fig. 4: einen Schnitt durch den Trockner aus Fig. 3 entlang der Ebene IV-IV in Fig. 3,
- Fig. 5: einen Teilschnitt durch den Trockner aus Fig. 3 entlang einer vertikalen Schnittebene nach dem Einführen der Evakuierungsleitung, und
- Fig. 6: einen Schnitt durch den Trockner aus Fig. 3 entlang der Ebene IV-IV aus Fig. 3.

Der in Fig. 3 gezeigte Trockner besitzt ein im wesentlichen zylindrisches Gehäuse 1 aus Kupferrohr, an dessen Längsenden jeweils eine Durchtrittsöffnung 2 bzw. 3 gebildet ist. Die Durchtrittsöffnung 3 ist durch einen zylindrischen Rohrstutzen gebildet, der vorgesehen ist, um eine von einem Verflüssiger kommende Kältemittelzufuhrleitung 5 einzuschieben und zu verlöten. Die Durchtrittsöffnung 2 am anderen Ende des Gehäuses hat einen schlüssellochähnlichen Querschnitt, dessen Gestalt in dem Querschnitt der Fig. 4 gut zu erkennen ist. Die Öffnung umfaßt einen kreisrunden Hauptabschnitt 10 und eine daran angrenzende Ausbuchtung 11, die so geformt ist, daß eine kreisrunde Rohrleitung mit geringerem Durchmesser als dem des Hauptabschnitts 10 in der Ausbuchtung 11 untergebracht werden kann, ohne in den Hauptausschnitt 10 einzugreifen.

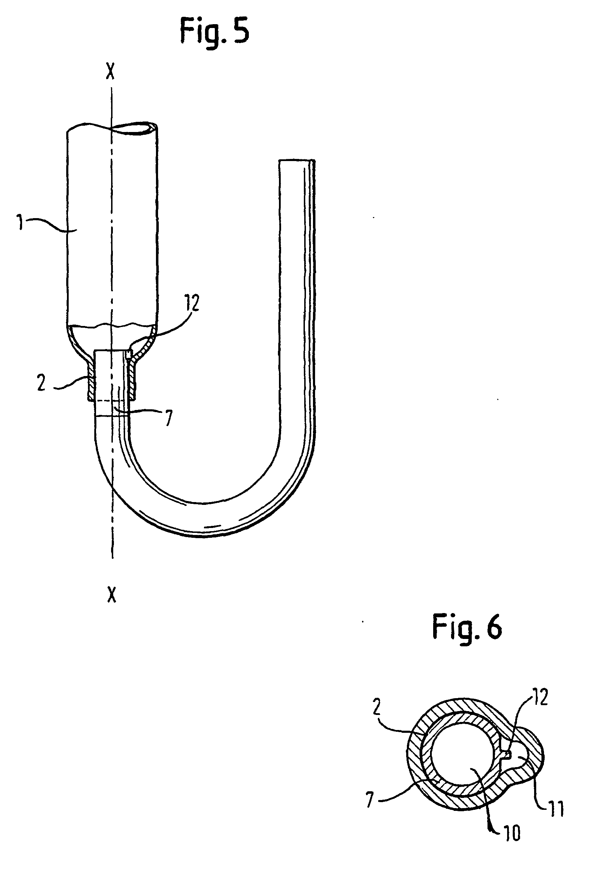

Die Evakuierungsleitung 7, die in der auseinandergezogenen Darstellung der Fig. 3 unterhalb der Durchtrittsöffnung 2 gezeigt ist, hat einen solchen Außendurchmesser, daß sie mit geringem Spiel oder auch reibschlüssig in den Hauptabschnitt 10 der Durchtrittsöffnung 2 einführbar ist. An dem zum Einführen in das Gehäuse 1 vorgesehenen Endabschnitt der Evakuierungsleitung 7 ist ein Vorsprung 12 durch Prägen oder durch Verbiegen der Wand der Leitung 7 nach außen gebildet, dessen Radius so groß ist, daß er nicht in den Hauptabschnitt 10 paßt. Um die Evakuierungsleitung 7 in die Durchtrittsöffnung 2 einzuführen, ist es daher notwendig, sie so zu orientieren, daß der Vorsprung 12 in die Ausbuchtung 11 eingreift. Fig. 6 zeigt einen Schnitt durch den Trockner 1 in Höhe der Durchtrittsöffnung 2 während des Einführens der Evakuierungsleitung 7, wo der Vorsprung 12 in der angegebenen Weise in die Ausbuchtung 11 eingreift. Wenn der Endabschnitt die Durchtrittsöffnung 2 durchlaufen hat und der Vorsprung 12 sich vollständig innerhalb des Gehäuses 1 befindet, kann die Evakuierungsleitung 7 um die in Fig. 6 mit X-X bezeichnete Längsachse des Gehäuses 1 gedreht werden, mit der Folge, daß der Vorsprung 12 im Innern des Gehäuses 1 am oberen Rand der Durchtrittsöffnung 2 aufliegt und so die Evakuierungsleitung 7 auch ohne eine dauerhafte Befestigung am Herausfallen aus der Durchtrittsöffnung 2 hindert. In die in diesem Zustand durchgehend freie Ausbuchtung 11 kann nun die Kapillare 6 eingeführt werden. An der Kapillare ist ein gekröpfter Abschnitt 13 in einem vorgegebenen Abstand vom Ende der Kapillare gebildet. Wenn dieser gekröpfte Abschnitt 13 auf den Rand der Durchtrittsöffnung 2 stößt, kann die Kapillare nicht weiter eingeführt werden; auf diese Weise ist die Montageposition der Kapillare vorgegeben, ohne daß eine Messung hierfür notwendig ist.

Nachdem die Evakuierungsleitung 7 und die Kapillare 6 wie beschrieben in die Durchtrittsöffnung 2 eingeführt worden sind, können beide darin verlötet werden. Da sich Kapillare 6 und Evakuierungsleitung 7 nur an einem Punkt ihres Umfangs berühren, kann es entlang des Umfangs der Durchtrittsöffnung 2 keine von der Lotzufuhr abgeschnittenen Bereiche geben, die zu Undichtigkeiten führen könnten.

## Patentansprüche

1. Trockner für den Kältemittelkreislauf eines Kältegeräts, mit einem Gehäuse (1), das eine erste und eine zweite Durchtrittsöffnung (2, 3) aufweist, **dadurch gekennzeichnet, daß** der Querschnitt der ersten Durchtrittsöffnung (2) einen kreisrunden Hauptabschnitt (10) und eine seitliche Ausbuchtung (11) aufweist.

2. Trockner nach Anspruch 1, **dadurch gekennzeichnet, daß** die seitliche Ausbuchtung eine Kapillare (6) für den Austritt des Kältemittels aufnimmt.

3. Trockner nach einem der vorhergehenden Ansprüche, **dadurch gekennzeichnet, daß** der Hauptabschnitt (10) eine Evakuierungsleitung (7) aufnimmt.

4. Trockner nach Anspruch 3, **dadurch gekennzeichnet, daß** die Evakuierungsleitung (7) an ihrem in das Gehäuse (1) eingeführten Ende einen Vorsprung (12) trägt.

5. Trockner nach Anspruch 4, **dadurch gekennzeichnet, daß** der Vorsprung (12) durch Aufweiten des Endes der Evakuierungsleitung (7) gebildet ist.

6. Trockner nach einem der vorhergehenden Ansprüche, **dadurch gekennzeichnet, daß** er in einem Kältegerät mit nach unten orientierter erster Durchtrittsöffnung (2) montiert ist.

7. Verfahren zur Montage eines Trockners nach einem der vorhergehenden Ansprüche, **dadurch gekennzeichnet, daß** zuerst die Evakuierungsleitung (7) in den Hauptabschnitt (10) der ersten Durchtrittsöffnung (2) eingeführt und gegen Herausfallen gesichert wird, und daß anschließend die Kapillare (6) in die Ausbuchtung (11) eingeführt wird.

8. Verfahren nach Anspruch 7, **dadurch gekennzeichnet, daß** die Evakuierungsleitung (7) mit in die Ausbuchtung (11) eingreifendem Vorsprung (12) in die erste Durchtrittsöffnung (2) eingeführt wird, und daß das Sichern ein Verdrehen der Evakuierungsleitung (7) in der ersten Durchtrittsöffnung (2) umfaßt.

9. Verfahren nach Anspruch 7 oder 8, **dadurch gekennzeichnet, daß** die Kapillare (6) in die Ausbuchtung (11) eingeführt wird, bis eine an der Kapillare (6) vorgeformte Biegung (13) gegen den Rand der Durchtrittsöffnung (2) stößt.

## Claims

1. Drier for the refrigerant circuit of a refrigerating appliance, comprising a housing (1) which has a first and a second passage opening (2, 3), **characterised in that** the cross-section of the first passage opening (2) has a circularly round main section (10) and a lateral outward bulge (11).

2. Drier according to claim 1, **characterised in that** the lateral outward bulge receives a capillary (6) for exit of the refrigerant.

3. Drier according one of the preceding claims, **characterised in that** the main section (10) receives an evacuation duct (7).

4. Drier according to claim 3, **characterised in that** the evacuation duct (7) carries a projection (12) at its end introduced into the housing (1).

5. Drier according to claim 4, **characterised in that** the projection (12) is formed by enlargement of the end of the evacuation duct (7).

6. Drier according to one of the preceding claims, **characterised in that** it is mounted in a refrigerating appliance with downwardly oriented first passage opening (2).

7. Method of mounting the drier according to one of the preceding claims, **characterised in that** initially the evacuation duct (7) is introduced into the main section (10) of the first passage opening (2) and secured against dropping out and that subsequently the capillary (6) is introduced into the outward bulge (11).

8. Method according to claim 7, **characterised in that** the evacuation duct (7) together with projection (12) engaging into the outward bulge (11) is introduced into the first passage opening (2) and that the securing comprises a rotation of the evacuation duct (7) in the first passage opening (2).

9. Method according to claim 7 or 8, **characterised in that** the capillary (6) is introduced into the outward bulge (11) until a bend (13), which is preformed at the capillary (6), abuts against the edge of the passage opening (2).

## Revendications

1. Séchoir pour un circuit de réfrigérant d'un appareil de réfrigération, avec un boîtier (1), muni d'un premier et d'un second orifice de passage (2, 3), **caractérisé en ce que** la section transversale du premier orifice de passage (2) présente une section principale circulaire (10) et une courbure latérale (11).

2. Séchoir selon la revendication 1, **caractérisé en ce que** la courbure latérale réceptionne un capillaire (6), pour la sortie du réfrigérant.

3. Séchoir selon l'une quelconque des revendications précédentes, **caractérisé en ce que** la section principale (10) réceptionne une conduite d'évacuation (7).

4. Séchoir selon la revendication 3, **caractérisé en ce que** la conduite d'évacuation (7) est munie d'une saillie (12), sur son extrémité introduite dans le boîtier (1).

5. Séchoir selon la revendication 4, **caractérisé en ce que** la saillie (12) est formée par un évasement de l'extrémité de la conduite d'évacuation (7).

6. Séchoir selon l'une quelconque des revendications précédentes, **caractérisé en ce qu'**il est monté dans un appareil de réfrigération avec un premier orifice de passage (2) orienté vers le bas.

7. Procédé de montage d'un séchoir selon l'une quelconque des revendications précédentes, **caractérisé en ce que** d'abord la conduite d'évacuation (7) est introduite dans la section principale (10) du premier orifice de passage (2) et sécurisée contre sa chute et **en ce qu'**ensuite le capillaire (6) est introduit dans la courbure (11).

8. Procédé selon la revendication 7, **caractérisé en ce que** la conduite d'évacuation (7) est introduite dans le premier orifice de passage (2) par une saillie (12), s'accrochant dans la courbure (11) et **en ce que** la sécurisation comprend une rotation de la conduite d'évacuation (7) dans le premier orifice de passage (2).

9. Procédé selon l'une quelconque des revendications 7 ou 8, **caractérisé en ce que** le capillaire (6) est introduit dans la courbure (11), jusqu'à ce qu'un cintrage (13) préformé sur le capillaire (6) bute contre le bord de l'orifice de passage (2).
